(19) **Europäisches Patentamt / European Patent Office / Office européen des brevets**

(11) **EP 3 349 088 B1**

(12) # EUROPEAN PATENT SPECIFICATION

(45) Date of publication and mention of the grant of the patent:
**07.09.2022 Bulletin 2022/36**

(21) Application number: **18150249.3**

(22) Date of filing: **04.01.2018**

(51) International Patent Classification (IPC):
**G05D 1/10** (2006.01)     **G01C 21/20** (2006.01)
**G08G 5/00** (2006.01)     **G05D 1/02** (2020.01)

(52) Cooperative Patent Classification (CPC):
**G08G 5/0034; G01C 11/02; G05D 1/0005**

(54) **SYSTEMS AND METHOD FOR TURN ANGLE CONSTRAINED AERIAL PATH PLANNING**

SYSTEME UND VERFAHREN ZUR LUFTPFADPLANUNG MIT DREHWINKELBESCHRÄNKUNGEN

SYSTÈMES ET PROCÉDÉ DE PLANIFICATION DE TRAJECTOIRE D'UN UAV COMPRENANT DES CONTRAINTES SUR L'ANGLE MAXIMUM DES VIRAGES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.01.2017 IN 201721001481**

(43) Date of publication of application:
**18.07.2018 Bulletin 2018/29**

(73) Proprietor: **Tata Consultancy Services Limited Maharashtra (IN)**

(72) Inventors:
- **Sharma, Hrishikesh**
  **400021 Mumbai, Maharashtra (IN)**
- **Sebastian, Tom Kollamparambil**
  **400021 Mumbai, Maharashtra (IN)**
- **Purushothaman, Balamuralidhar**
  **400021 Mumbai, Maharashtra (IN)**

(74) Representative: **Goddar, Heinz J.**
**Boehmert & Boehmert**
**Anwaltspartnerschaft mbB**
**Pettenkoferstrasse 22**
**80336 München (DE)**

(56) References cited:
- YAKOVLEV KONSTANTIN ET AL: "Grid-Based Angle-Constrained Path Planning", 3 November 2015 (2015-11-03), ECCV 2016 CONFERENCE; [LECTURE NOTES IN COMPUTER SCIENCE; LECT.NOTES COMPUTER], SPRINGER INTERNATIONAL PUBLISHING, CHAM, PAGE(S) 208 - 221, XP047413814, ISSN: 0302-9743 ISBN: 978-3-642-33485-6 [retrieved on 2015-11-03] * page 1 * * page 5 - page 9 * * figures 2, 3 *
- Alex Nash ET AL: "Incremental Phi: Incremental Any-Angle Path Planning on Grids", , 31 December 2009 (2009-12-31), XP055454258, Retrieved from the Internet: URL:http://idm-lab.org/bib/abstracts/paper s/ijcai09d.pdf [retrieved on 2018-02-26]
- KONSTANTIN YAKOVLEV ET AL: "Resolving Spatial-Time Conflicts In A Set Of Any-angle Or Angle-constrained Grid Paths", ARXIV.ORG, CORNELL UNIVERSITY LIBRARY, 201 OLIN LIBRARY CORNELL UNIVERSITY ITHACA, NY 14853, 9 August 2016 (2016-08-09), XP080719105,
- SHARMA HRISHIKESH ET AL: "An efficient backtracking-based approach to turn-constrained path planning for aerial mobile robots", 2017 EUROPEAN CONFERENCE ON MOBILE ROBOTS (ECMR), IEEE, 6 September 2017 (2017-09-06), pages 1-8, XP033251324, DOI: 10.1109/ECMR.2017.8098712 [retrieved on 2017-11-06]

EP 3 349 088 B1

- HRISHIKESH SHARMA ET AL: "An Efficient Approach to Communication-aware Path Planning for Long-range Surveillance Missions undertaken by UAVs", ARXIV.ORG, CORNELL UNIVERSITY LIBRARY, 201 OLIN LIBRARY CORNELL UNIVERSITY ITHACA, NY 14853, 14 July 2017 (2017-07-14), XP080776836,
- LUCA DE FILIPPIS ET AL: "Path Planning Strategies for UAVS in 3D Environments", JOURNAL OF INTELLIGENT AND ROBOTIC SYSTEMS ; THEORY AND APPLICATIONS - (INCORPORATING MECHATRONIC SYSTEMS ENGINEERING), KLUWER ACADEMIC PUBLISHERS, DO, vol. 65, no. 1 - 4, 16 August 2011 (2011-08-16), pages 247-264, XP019989896, ISSN: 1573-0409, DOI: 10.1007/S10846-011-9568-2

## Description

CROSS-REFERENCE TO RELATED APPLICATIONS AND PRIORITY

This patent application claims priority to India Patent Application 201721001481, filed on January 13, 2017.

TECHNICAL FIELD

The embodiments herein generally relate to aerial path planning, and more particularly to systems and methods for turn angle constrained aerial path planning implementable even in presence of coverage holes.

BACKGROUND

Usage of aerial vehicles such as unmanned aerial vehicles (UAVs) for maintenance inspections of critical utility infrastructures, is rapidly emerging as a popular option. Installations for critical utility infrastructures generally have a characteristic of being long and linear and are mostly vast in terms of size and length probably running into hundreds of kilometers. Maintenance, both preventive and breakdown, is typically a costly legal responsibility towards public safety. Hence it entails usage of fixed-wing vehicles such as drones, which are constrained with restricted angular movement. Further, due to non-urban terrain, radio connectivity of any nature is at best intermittent, due to presence of many coverage holes. Such connectivity badly hampers the transmission of captured video data, which cannot be stored on-board due to its sheer size. Conventional methods require a lot of preprocessing for turn constraint. Also, the methods do not address coverage holes through which passage is restrained but not forbidden, thereby resulting in loss of captured data during the passage of the drones through coverage holes. Also, distance cost needs to be minimized in view of obstacles that may be entailed along the path. D1 (YAKOVLEV KONSTANTIN ET AL: "Grid-Based Angle-Constrained Path Planning", 3 November 2015 (2015-11-03), ECCV 2016 CONFERENCE) disclose that *Square grids are commonly used in robotics and game development as spatial models and well known in AI community heuristic search algorithms (such as A\*, JPS, Theta\* etc.) are widely used for path planning on grids. A lot of research is concentrated on finding the shortest (in geometiical sense) paths while in many applications finding smooth paths (rather than the shortest ones but containing sharp turns) is preferable. In this paper we study the problem of generating smooth paths and concentrate on angle constrained path planning. We put angle-constrained path planning problem formally and present a new algorithm tailored to solve it - LIAN. We examine LIAN both theoretically and empirically. We show that it is sound and complete (under some reshictions). We also show that LIAN outperforms the ana-* logues when solving numerous path planning tasks within urban outdoor navigation scenarios. D2 (Alex Nash ET AL: "Incremental Phi: Incremental Any-Angle Path Planning on Grids", 31 December 2009 (2009-12-31)) disclose that *we study path planning on grids witli blocked and unblocked cells. Any-angle path-planning algorithms find short paths fast because they propagate information along grid edges without constraining the resulting paths to grid edges. Incremental path-planning algorithms solve a series of similar path-planning problems faster than repeated single-shot searches because they reuse information from die previous search to speed up the next one. In this paper, we combine these ideas by making the any angle path-planning algorithm Basic Theta\* incremental. This is non-trivial because Basic Theta\* does not fit the Standard assumption that the parent of a vertex in the search tree must also be its neighbor. We present Incremental Phi\* and show experimentally that it can speed up Basic Theta\* by about one order of magnitude for path planning with the freespace assumption.*

SUMMARY

Embodiments of the present disclosure present technological improvements as solutions to one or more of the above-mentioned technical problems recognized by the inventors in conventional systems.

In an aspect, there is provided a processor implemented method according to claim 1.

In another aspect, there is provided a system according to claim 5.

In yet another aspect, there is provided a computer program product according to claim 9.

In an embodiment of the present disclosure, the one or more hardware processors are further configured to discretize the 3D Euclidean navigation space by imposing a grid of a plurality of unit cells, on the 3D Euclidean navigation space.

In an embodiment of the present disclosure, the grid is either a patterned grid or an irregular grid.

In an embodiment of the present disclosure, backtracking to the at least one prior node comprises backtracking one or more cells from the plurality of cells and is agnostic of boundaries of the one or more cells.

It is to be understood that both the foregoing general description and the following detailed description are exemplary and explanatory only and are not restrictive of the embodiments of the present disclosure, as claimed.

BRIEF DESCRIPTION OF THE DRAWINGS

The embodiments herein will be better understood from the following detailed description with reference to the drawings, in which:

FIG.1 illustrates an exemplary block diagram of a system for turn angle-constrained aerial path planning, in accordance with an embodiment of the present disclosure;

FIG.2 is an exemplary flow diagram illustrating a computer implemented method for turn angle-constrained aerial path planning, in accordance with an embodiment of the present disclosure;

FIG.3A and FIG.3B provide an illustrative comparison between a discrete shortest path using square grid as known in the art and an actual continuous shortest path;

FIG.4 illustrates node nomenclature for a shortest path algorithm, in accordance with an embodiment of the present disclosure;

FIG.5 illustrates turn angle consideration in the aerial path planning, in accordance with an embodiment of the present disclosure; and

FIG.6 illustrates a graphical representation of backtracking to a prior node, in accordance with an embodiment of the present disclosure.

It should be appreciated by those skilled in the art that any block diagram herein represent conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and so executed by a computing device or processor, whether or not such computing device or processor is explicitly shown.

DETAILED DESCRIPTION

The embodiments herein and the various features and advantageous details thereof are explained more fully with reference to the non-limiting embodiments that are illustrated in the accompanying drawings and detailed in the following description. The examples used herein are intended merely to facilitate an understanding of ways in which the embodiments herein may be practiced and to further enable those skilled in the art to practice the embodiments herein. Accordingly, the examples should not be construed as limiting the scope of the embodiments herein.

The words "comprising," "having," "containing," and "including," and other forms thereof, are intended to be equivalent in meaning and be open ended in that an item or items following any one of these words is not meant to be an exhaustive listing of such item or items, or meant to be limited to only the listed item or items.

It must also be noted that as used herein and in the appended claims, the singular forms "a," "an," and "the" include plural references unless the context clearly dictates otherwise. Although any systems and methods similar or equivalent to those described herein can be used in the practice or testing of embodiments of the present disclosure, the preferred, systems and methods are now described.

Some embodiments of this disclosure, illustrating all its features, will now be discussed in detail. The disclosed embodiments are merely exemplary of the disclosure, which may be embodied in various forms.

Before setting forth the detailed explanation, it is noted that all of the discussion below, regardless of the particular implementation being described, is exemplary in nature, rather than limiting.

The present disclosure provides systems and methods that ensure transmission continuity of data from aerial vehicles even in presence of radio coverage holes by turn angle constrained path planning. Technical problems faced in employing conventional methods include challenges in storing captured data, particularly video data on board due to the size of the data; transmitting the captured data resulted in loss of data when the aerial vehicle passes through coverage holes. Furthermore, a lot of preprocessing was involved for turn constraint in the conventional methods. Methods of the present disclosure involve less processing time while having approximation error well within bound. The methods of the present disclosure use a minimal greedy backtracking strategy to satisfy the turn angle constraint. The technical problem is treated as a discrete optimization problem that works over discretized version of navigation space which is Euclidean. It is based on modifications carried out to the Theta* algorithm (originally designed for computer games domain) to incorporate the turn constraint. If during path evolution, turn constraint gets violated even after considering all the neighboring nodes of a current node, then the path evolution is backtracked. It may be noted by persons skilled in the art that conventional greedy algorithms do not backtrack.

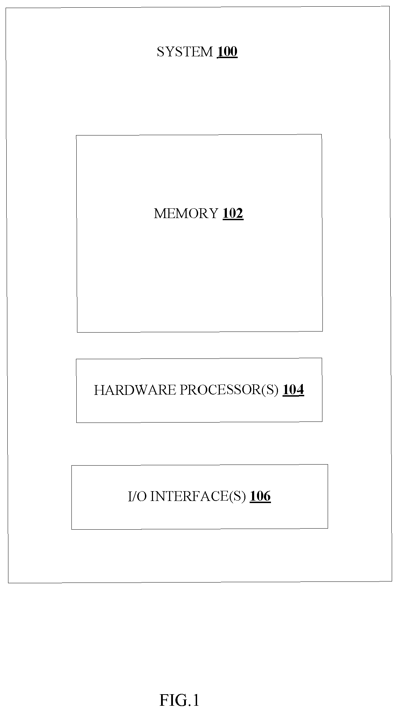

Referring now to the drawings, and more particularly to FIGS. 1 through 6, where similar reference characters denote corresponding features consistently throughout the figures, there are shown preferred embodiments and these embodiments are described in the context of the following exemplary system and method.

FIG.1 illustrates an exemplary block diagram of a system 100 for turn angle-constrained aerial path planning, in accordance with an embodiment of the present disclosure. In an embodiment, the system 100 includes one or more processors 104, communication interface device(s) or input/output (I/O) interface(s) 106, and one or more data storage devices or memory 102 operatively coupled to the one or more processors 104. The one or more processors 104 that are hardware processors can be implemented as one or more microprocessors, microcomputers, microcontrollers, digital signal processors, central processing units, state machines, graphics controllers, logic circuitries, and/or any devices that manipulate signals based on operational instructions. Among other capabilities, the processor(s) are configured to fetch and execute computer-readable instructions stored in the memory. In an embodiment, the system 100 can be implemented in a variety of computing systems, such as laptop computers, notebooks, hand-held devices, workstations, mainframe computers, servers, a network cloud and the like.

The I/O interface device(s) 106 can include a variety of software and hardware interfaces, for example, a web interface, a graphical user interface, and the like and can facilitate multiple communications within a wide variety of networks N/W and protocol types, including wired networks, for example, LAN, cable, etc., and wireless networks, such as WLAN, cellular, or satellite. In an embodiment, the I/O interface device(s) can include one or more ports for connecting a number of devices to one another or to another server.

The memory 102 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. In an embodiment, one or more modules (not shown) of the system 100 can be stored in the memory 102.

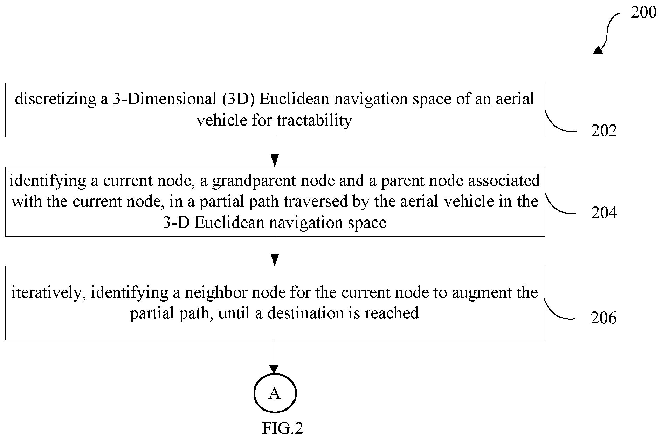

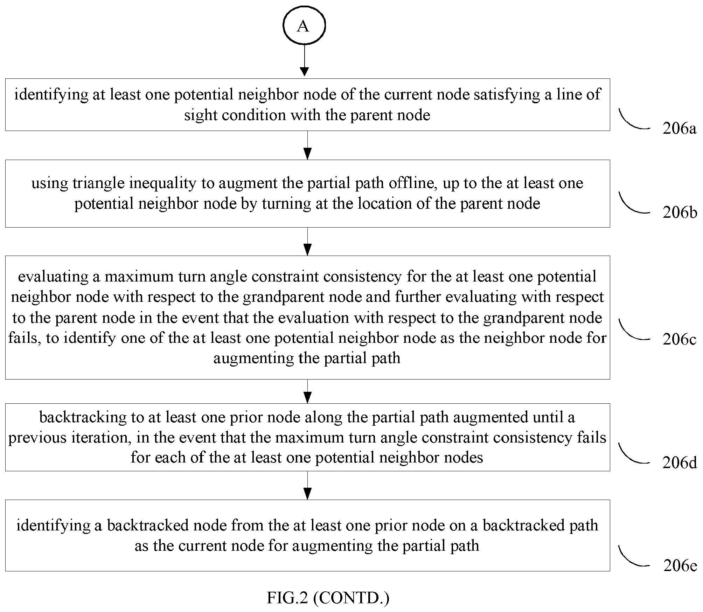

FIG.2 is an exemplary flow diagram illustrating a computer implemented method 200 for turn angle-constrained aerial path planning, in accordance with an embodiment of the present disclosure. In an embodiment, the system 100 comprises one or more data storage devices or memory 102 operatively coupled to the one or more processors 104 and is configured to store instructions configured for execution of steps of the method 200 by the one or more processors 104.

In the context of the present disclosure, the expression "aerial vehicle" may refer to any fixed-wing vehicle such as unmanned aerial vehicles (UAVs) or drones, gliders, airplanes, and the like.

Formal specification of any optimization problem entails specification of decision variables, the cost/objective as a function of the variables, and constraints wherever applicable. In terms of the decision variables, there is only one set involved, the 3D instantaneous location of the UAV: <x,y,z>. If the altitude is held/assumed constant, then the location is a 2-tuple, formed by latitude and longitude. In terms of constraint, the present disclosure focusses on an additional critical constraint, viz., turn angle constraint arising out of communication and aerodynamics requirements. The turn angle constraint forces a generated path to make a turning maneuver, less than or equal to a predetermined maximum turning angle. This constraint avoids possibility of an aerodynamic stall during motion of a fixed wing vehicle.

Distance cost is a mandatory cost component in all path planning algorithms that have arisen till date. It represents the length, in Euclidean space, of an optimal path undertaken by the aerial vehicle. This cost directly correlates to the limited battery power of the aerial vehicle, which is not fuel-driven. At a certain speed of the aerial vehicle, against an assumed constant wind speed, the energy of a charged battery may last only a certain distance. To try to maximize the mission, given that application required tens of kilometers to be remotely surveyed, the distance cost has to be minimized. In a discrete graph model of the navigation space, this reduces to finding the shortest path in Euclidean space (Euclidean shortest path).

For any path in discrete grid, piecewise-linear path assumption is a valid assumption also because of the shortest length, *Lmin* constraint. In such a case, insertion of additional variables to denote turning points of the aerial vehicle and sum of Euclidean distances between such successive turning points, is a direct measure of such cost. Let $P_{T_i}$; $i \in 1, ..., T$ be the coordinate tuple of each turning point along a path in a coordinate system such as say, world coordinate system (WCS). Then,

$$Path\ cost = \sum_{i=1}^{T-1} ||P_{T_{i+1}} - P_{T_i}||$$

wherein $\| . \|$ denotes an appropriate norm, typically being L2 (Least squares) norm.

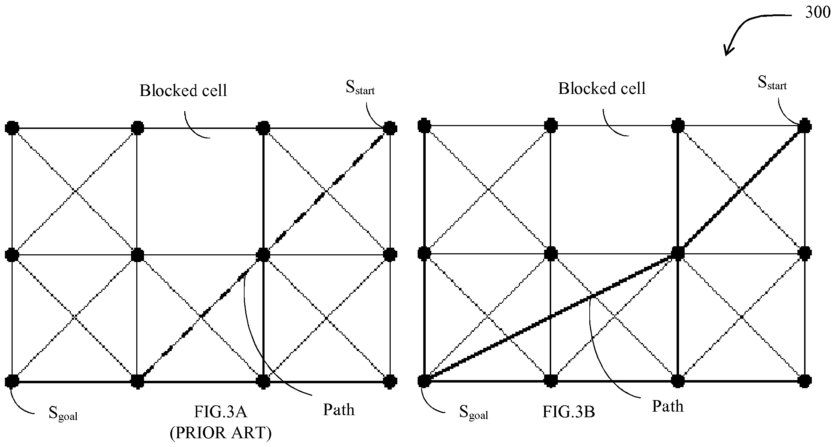

Due to its simplicity and optimality guarantee under admissibility criterion, A* search algorithm, has been till recently, the search method of choice in real applications. However, in geographical applications in which the environment is continuous, a shortest path found using A* on any discretized graph as illustrated in FIG.3A is not equivalent to an actual shortest path in a continuous environment as illustrated in FIG.3B. In FIG.3A and FIG.3B, $S_{start}$ and $S_{goal}$ generally represent start vertex and goal vertex of a search path and all cells other than those specifically indicated as blocked cells are unblocked cells. Subsequently, a technique which smoothens the path as it is being greedily evolved, thus reducing the gap (between the shortest path using square grid and continuous shorted path) extensively, was developed in the form of Theta* algorithm. Theta* is a variant of A* that does not constrain the path being evolved to stick to grid edges. The key difference between Theta* and A* is that Theta* allows the parent of a vertex to be any vertex, unlike A* where the parent must be a visible neighbor. To have such extended, transitive parental relation, Theta* updates the g-value (length of the shortest path from a start vertex to vertex s found so far) and parent of an unexpanded visible neighbor *s'* of vertex s by considering an alternative extension. To allow for any-angle paths, in each iteration, Theta* additionally considers the grandfatherly extension from parent(s) to neighbor s' in a straight line *[cost = c(parent(s), s')]*, resulting in a new length of *g(parent(s)) + c(parent(s),s)* if s' has line-of-sight to parent(s). The idea behind considering this alternative is that in case of Euclidean shortest path problems, this alternative is never longer than previous default path, due to the triangle inequality, if s' has line-of-sight to parent(s). If line of sight is not present, then the extension in current iteration happens in the normal A* way, along the grid.

To reduce computational complexity, in an embodiment, at step 202, the one or more processors 104 are configured to discretize a 3-Dimensional (3D) Euclidean navigation space of an aerial vehicle for tractability. A grid of a plurality of unit cells is imposed on the 3D Euclidean navigation space, wherein the grid may be either a patterned grid or an irregular grid. In a discrete 3D Euclidean navigation space with obstacles, it is known that the underlying set of grid points is not convex. Also, for spaces of dimension 3 and above, the path optimization problem is NP (Non-deterministic Polynomial) hard. Hence algorithms, typically inspired by shortest path algorithms in a convex domain, e.g. Dijkstra, have been researched for design for approximately optimal solutions/paths. The Theta* algorithm, which is a basic approximation algorithm improves upon the approximation error while using A*, by trading off minimally with computational complexity. Hence Theta* algorithm has been used in the present disclosure.

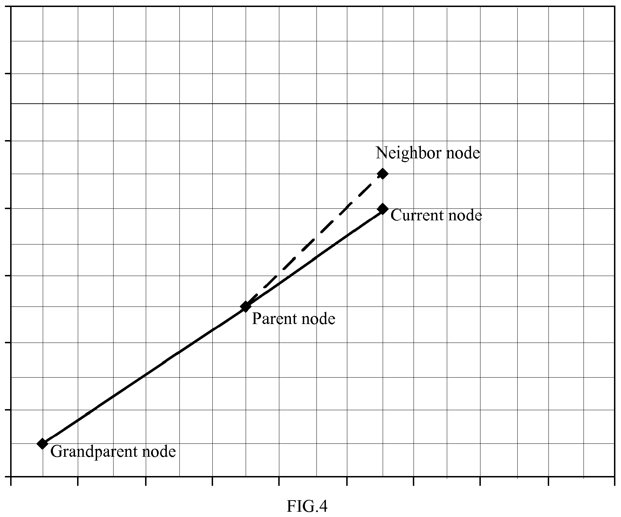

In accordance with the present disclosure, in a greedy approach, turn is necessarily detected at each path augmentation step, to ensure that the angle constraint is continuously satisfied. FIG.4 illustrates node nomenclature for a shortest path algorithm, in accordance with an embodiment of the present disclosure. In an embodiment, at step 204, the one or more processors 104 are configured to identify a current node, a grandparent node and a parent node associated with the current node, in a partial path traversed by the aerial vehicle in the 3-D Euclidean navigation space. The present disclosure also relies on a theorem (stated here without proof) - In a greedy Theta* shortest path algorithm, the direction formed by <grandparent, parent> and the direction formed by <parent, current> are not same. Accordingly, the nodes grandparent, parent and current are not collinear.

In an embodiment, at step 206, the one or more processors 104 are configured to iteratively, identify a neighbor node for the current node to augment the partial path, until a destination is reached. This step involves several sub-steps as explained hereinafter.

In an embodiment, at step 206a, the one or more processors 104 are configured to identify at least one potential neighbor node of the current node satisfying a line of sight condition with the parent node. If a line of sight exists, then at step 206b, using triangle inequality the partial path is augmented offline, up to the at least one potential neighbor node by turning at a location corresponding to the parent node.

To identify one of the at least one potential neighbor node as the neighbor node for augmenting the partial path, at step 206c, a maximum turn angle constraint consistency is evaluated for the at least one potential neighbor node with respect to the grandparent node and further with respect to the parent node in the event that the evaluation with respect to the grandparent node fails.

In an embodiment, a maximum turn angle constraint for the at least one potential neighbor node is evaluated with respect to the grandparent node by checking if the angle subtended by (a) a line between the grandparent node and the parent node and b) a line between the parent node and the potential neighbor node is within a pre-determined maximum turning angle of the aerial vehicle identifying one of the at least one potential neighbor node as the neighbor node. If the turn angle is 0 degree, then the constraint is trivially true.

If the evaluation with respect to the grandparent node fails, the maximum turn angle constraint for the at least one potential neighbor node is then evaluated with respect to the parent node by checking if the angle subtended by (a) a line between the parent node and the current node and b) a line between the current node and the potential neighbor node is within the pre-determined maximum turning angle of the aerial vehicle. In accordance with the present disclosure, the line between parent node and the current node, due to nature of Theta* algorithm, need not be aligned at all with any grid dimension or grid diagonals. Hence the possibility of success at this step is also on the higher side, than the possibility considering pure A*. Once again, if the turn angle is 0 degree, then the constraint is trivially true.

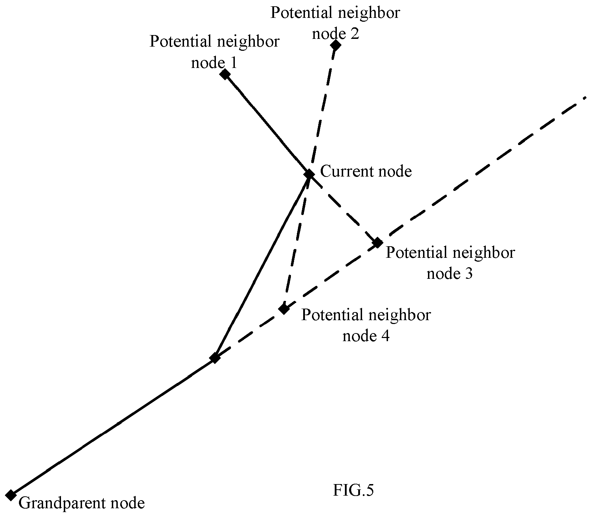

If in both cases explained herein above, the potential neighbor node fails the maximum turn angle constraint, and is not found suitable to qualify as a neighbor node for augmenting the path, then the neighbor node under consideration may be dropped from consideration and another neighbor node of the current node may be evaluated for compatible turn angle constrained path augmentation. FIG.5 illustrates turn angle consideration in the aerial path planning, in accordance with an embodiment of the present disclosure.

There are typical scenarios in square grids where plain angle checking involving grandparent and parent, all neighbor nodes of current node fails, especially around obstacles. In such case, the method 200 backtracks along the partial path augmented so far, and tries to approach the obstacle using some other neighbor of a prior node on the backtracked path. This leads to a possibility whereby the angle of approach towards an obstacle known/discovered becomes lesser/acute.

Other than obstacles, conventional methods that only consider neighbors, can also fail to augment a partial path through a coverage hole, which behaves like a porous obstacle. Due to lack of sharp turns, a path that is getting augmented within a coverage hole can only take a longer detour, before exiting the coverage hole. This can also lead to additional distance cost. If the path augmented so far is backtracked, it is possible to re-enter the coverage hole from a point and an angle of entry so that the sub-path within the coverage hole is more close to its boundary, than earlier.

In accordance with the present disclosure, for circumnavigation around an obstacle greedily the path is diminished in a minimal way. Hence, to backtrack, it is not necessary to backtrack all the way to the parent node of the current node. In Theta*, it is possible that the parent node is actually a node very far away from the current node, not necessarily at a distance of unit cell. It is imperative that the farther the path is backtracked and a detour approach is adopted, the higher the approximation error becomes. Hence in accordance with the present disclosure, via a modification to Theta*, which prior node participated in the triangle inequality for the current node is tracked. Accordingly, in an embodiment, at step 206d, the path is backtracked to at least one prior node along the partial path augmented until a previous iteration, in the event that the maximum turn angle constraint consistency fails for each of the at least one potential neighbor nodes. In an embodiment, backtracking to the at least one prior node comprises backtracking one or more unit cells from the plurality of unit cells and is agnostic (independent) of boundaries of the one or more cells. The step of backtracking further comprises optimizing the backtracking by successively stepping back to the at least one prior node, a unit cell away from the current node which satisfies the triangle inequality with respect to the current node, until a potential neighbor node of the prior node satisfying the maximum turn angle constraint is obtained as the backtracked node; the unit cell being part of the plurality of unit cells on the 3D Euclidean navigation space. It may be noted that the variation to Theta* is heuristic, just like in presence of obstacles, Theta* augmentation is a greedy heuristics.

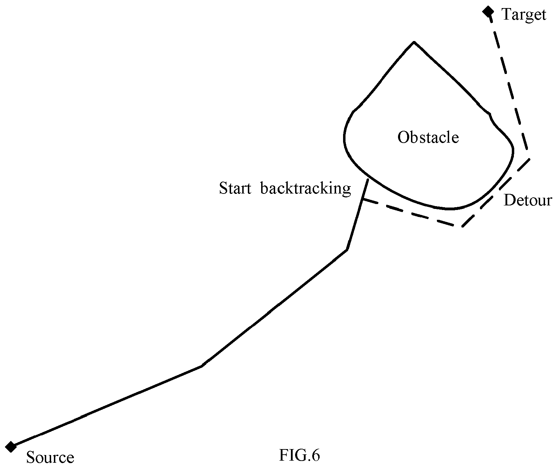

In an embodiment, at step 206e, the one or more processors 104 are configured to identify a backtracked node from the at least one prior node on a backtracked path as the current node for augmenting the partial path. FIG.6 illustrates a graphical representation of backtracking to a prior node, in accordance with an embodiment of the present disclosure.

Thus in accordance with the present disclosure, systems and methods described herein above overcome the aforementioned limitations of conventional methods by discretizing the navigation space for tractability and providing a greedy heuristic algorithm to keep discretization error in control with robust average-case performance (in terms of approximation error with respect to best path). Limited backtracking, when absolutely needed is performed which decreases process time and works effectively in presence of coverage holes. Furthermore, the present disclosure provides methods that may be scaled to 3D space in a straightforward manner.

The written description describes the subject matter herein to enable any person skilled in the art to make and use the embodiments of the present disclosure. The scope of the subject matter embodiments defined here may include other modifications that occur to those skilled in the art. Such other modifications are intended to be within the scope if they have similar elements that do not differ from the literal language of the claims or if they include equivalent elements with insubstantial differences from the literal language.

The scope of the subject matter embodiments defined here may include other modifications that occur to those skilled in the art. Such other modifications are intended to be within the scope if they have similar elements that do not differ from the literal language of the claims or if they include equivalent elements with insubstantial differences from the literal language.

It is, however to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g. any kind of computer like a server or a personal computer, or the like, or any combination thereof. The device may also include means which could be e.g. hardware means like e.g. an application-specific integrated circuit (ASIC), a field-programmable gate array (FPGA), or a combination of hardware and software means, e.g. an ASIC and an FPGA, or at least one microprocessor and at least one memory with software modules located therein. Thus, the means can include both hardware means and software means. The method embodiments described herein could be implemented in hardware and software. The device may also include software means. Alternatively, the embodiments of the present disclosure may be implemented on different hardware devices, e.g. using a plurality of CPUs.

The embodiments herein can comprise hardware and software elements. The embodiments that are implemented in software include but are not limited to, firmware, resident software, microcode, etc. The functions performed by various modules comprising the system of the present disclosure and described herein may be implemented in other modules or combinations of other modules. For the purposes of this description, a computer-usable or computer readable medium can be any apparatus that can comprise, store, communicate, propagate, or transport the program for use by or in connection with the instruction execution system, apparatus, or device. The various modules described herein may be implemented as software and/or hardware modules and may be stored in any type of non-transitory computer readable medium or other storage device. Some non-limiting examples of non-transitory computer-readable media include CDs, DVDs, BLU-RAY, flash memory, and hard disk drives.

**Claims**

1. A processor implemented method (200) for minimizing the length of a path undertaken by a fixed-wing aerial vehicle, wherein a partial path is iteratively augmented until a destination has been reached, comprising:

discretizing a 3-Dimensional (3D) Euclidean navigation space of the aerial vehicle with at least one obstacle for tractability (202); starting from a start vertex, iteratively identifying a neighbor node for the current node to augment the partial path, until the destination is reached (206) using a Theta* algorithm that is modified to incorporate a maximum turn angle constraint, by identifying a current node, a grandparent node and a parent node associated with the current node, in a partial path in the 3-D Euclidean navigation space (204); identifying at least one potential neighbor node of the current node satisfying a line of sight condition with the parent node (206a); augmenting the partial path offline up to the at least one potential neighbor node, using the triangle inequality, so as to turn at a location corresponding to the parent node (206b), by extending the partial path from the parent node associated with the current node to the potential neighbor node satisfying the line of sight condition with the parent node in a straight line; evaluating a maximum turn angle constraint consistency for the at least one potential neighbor node with respect to the grandparent node, wherein one of the at least one potential neighbor nodes is identified as the neighbor node if the angle subtended by (a) a line between the grandparent node and the parent node and b) a line between the parent node and the potential neighbor node is within a pre-determined maximum turning angle of the aerial vehicle, in the event that the evaluation with respect to the grandparent node fails, further evaluating with respect to the parent node to identify one of the at least one potential neighbor node as the neighbor node for augmenting the partial path (206c), wherein one of the at least one potential neighbor nodes is identified as the neighbor node if the angle subtended by (a) a line between the parent node and the current node and b) a line between the current node and the potential neighbor node is within the pre-determined maximum turning angle of the aerial vehicle, if a potential neighbor node under consideration fails the maximum turn angle constraint in both instances, dropping the potential neighbor node under consideration and evaluating another neighbor node of the current node for path augmentation compatible with the maximum turn angle constraint; in the event that the maximum turn angle constraint consistency fails for each of the at least one potential neighbor nodes (206d), backtracking the path evolution to a prior node along the partial path augmented until a previous iteration, wherein the prior node is the current node of a previous iteration, up to which the partial path has been augmented until this previous iteration; and identifying a backtracked node from this prior node on the backtracked path as the current node for augmenting the partial path (206e), wherein this backtracked node is a potential neighbor node of this prior node satisfying the maximum turn angle constraint, wherein backtracking comprises successively stepping back to the current node in a previous iteration, until a potential neighbor node of the current node in the previous iteration satisfies the maximum turn angle constraint.

2. The processor implemented method of claim 1, wherein the step of discretizing comprises imposing a grid of a plurality of unit cells, on the 3D Euclidean navigation space.

3. The processor implemented method of claim 2, wherein the grid is either a patterned grid or an irregular grid.

4. The processor implemented method of claim 1, wherein backtracking to the at least one prior node comprises backtracking one or more unit cells from the plurality of unit cells.

5. A system (100) for minimizing the length of a path undertaken by a fixed-wing aerial vehicle, wherein a partial path is iteratively augmented until a destination has been reached, comprising:

one or more data storage devices (102) operatively coupled to one or more hardware processors (104) and configured to store instructions configured for execution by the one or more hardware processors to: discretize a 3-Dimensional (3D) Euclidean navigation space of an aerial vehicle with at least one obstacle for tractability; starting from a start vertex, iteratively, identify a neighbor node for the current node to augment the partial path, until a destination is reached, using a Theta* algorithm that is modified to incorporate a maximum turn angle constraint, by:

identifying a current node, a grandparent node and a parent node associated with the current node, in a partial path in the 3-D Euclidean navigation space, identifying at least one potential neighbor node of the current node satisfying a line of sight condition with the parent node; applying the triangle inequality to augment the partial path offline, up to the at least one potential neighbor node, so as to turn at a location corresponding to the parent node (206b),

by extending the partial path from the parent node associated with the current node to the potential neighbor node satisfying the line of sight condition with the parent node in a straight line,

evaluating a maximum turn angle constraint consistency for the at least one potential neighbor node with respect to the grandparent node, wherein one of the at least one potential neighbor nodes is identified as the neighbor node if the angle subtended by (a) a line between the grandparent node and the parent node and b) a line between the parent node and the potential neighbor node is within a pre-determined maximum turning angle of the aerial vehicle,

in the event that the evaluation with respect to the grandparent node fails, further evaluating with respect to the parent node to identify one of the at least one potential neighbor node as the neighbor node for augmenting the partial path; wherein one of the at least one potential neighbor nodes is identified as the neighbor node if the angle subtended by (a) a line between the parent node and the current node and b) a line between the current node and

the potential neighbor node is within the pre-determined maximum turning angle of the aerial vehicle,

if a potential neighbor node under consideration fails the maximum turn angle constraint in both instances, dropping the potential neighbor node under consideration and evaluating another neighbor node of the current node for path augmentation compatible with the maximum turn angle constraint;

in the event that the maximum turn angle constraint consistency fails for each of the at least one potential neighbor nodes backtracking the path evolution to a prior node along the partial path augmented until a previous iteration, wherein the prior node is the current node of a previous iteration, up to which the partial path has been augmented until this previous iteration; and

identifying a backtracked node from this prior node on the backtracked path as the current node for augmenting the partial path, wherein this backtracked node is a potential neighbor node of this prior node satisfying the maximum turn angle constraint,

wherein backtracking comprises successively stepping back to the current node in a previous iteration, until a potential neighbor node of the current node in the previous iteration satisfies the maximum turn angle constraint.

6. The system of claim 5, wherein the one or more hardware processors are further configured to: discretize the 3D Euclidean navigation space by imposing a grid of a plurality of unit cells, on the 3D Euclidean navigation space.

7. The system of claim 6, wherein the grid is either a patterned grid or an irregular grid.

8. The system of claim 5, wherein backtracking to the at least one prior node comprises backtracking one or more cells from the plurality of cells.

9. One or more non-transitory machine readable information storage mediums comprising one or more instructions which when executed by one or more hardware processors causes the one or more hardware processor to perform a method according to one of claims 1 to 4.

**Patentansprüche**

1. Prozessorimplementiertes Verfahren (200) zum Minimieren der Länge eines von einem Starrflügel-Luftfahrzeug unternommenen Pfades, wobei ein Teilpfad iterativ vergrößert wird, bis ein Ziel erreicht ist, umfassend:

Diskretisieren eines dreidimensionalen (3D) euklidischen Navigationsraums des Luftfahrzeugs mit mindestens einem Hindernis für die Lenkbarkeit (202);

ausgehend von einem Startvertex, iteratives Identifizieren eines Nachbarknotens für den aktuellen Knoten, um den Teilpfad zu vergrößern, bis das Ziel erreicht ist (206), unter Verwendung eines Theta*-Algorithmus, der so modifiziert ist, dass er eine Bedingung eines maximalen Drehwinkels enthält, durch

Identifizieren eines aktuellen Knotens, eines Großelternknotens und eines Elternknotens, die dem aktuellen Knoten zugeordnet sind, in einem Teilpfad in dem dreidimensionalen euklidischen Navigationsraum (204);

Identifizieren mindestens eines potenziellen Nachbarknotens des aktuellen Knotens, der eine Sichtlinienbedingung mit dem Elternknoten (206a) erfüllt;

Vergrößern des Teilpfades offline bis zu dem mindestens einen potenziellen Nachbarknoten unter Verwendung der Dreiecksungleichung, so dass an einer dem Elternknoten (206b) entsprechenden Position gedreht wird, durch Erweitern des Teilpfades von dem dem aktuellen Knoten zugeordneten Elternknoten zu dem potenziellen Nachbarknoten, der die Sichtlinienbedingung mit dem Elternknoten erfüllt, in einer geraden Linie;

Evaluieren der Konsistenz mit der Bedingung eines maximalen Drehwinkels für den mindestens einen potenziellen Nachbarknoten in Bezug auf den Großelternknoten, wobei einer der mindestens einen potenziellen Nachbarknoten als der Nachbarknoten identifiziert wird, wenn der Winkel, der von (a) einer Linie zwischen dem Großelternknoten und dem Elternknoten und (b) einer Linie zwischen dem Elternknoten und dem potenziellen Nachbarknoten eingeschlossen wird, innerhalb eines vorher bestimmten maximalen Drehwinkels des Luftfahrzeugs liegt,

für den Fall, dass die Evaluierung in Bezug auf den Großelternknoten fehlschlägt, weiteres Evaluieren in Bezug auf den Elternknoten, um einen der mindestens einen potenziellen Nachbarknoten als den Nachbarknoten zum Vergrößern des Teilpfades (206c) zu identifizieren, wobei einer der mindestens einen potenziellen Nachbarknoten als der Nachbarknoten identifiziert wird, wenn der Winkel, der von (a) einer Linie zwischen dem Elternknoten und dem aktuellen Knoten und (b) einer Linie zwischen dem aktuellen Knoten und dem potenziellen Nachbarknoten eingeschlossen wird, innerhalb des vorbestimmten maximalen Drehwinkels des Luftfahrzeugs liegt,

wenn ein betrachteter potenzieller Nachbarknoten die Bedingung eines maximalen Drehwinkels in beiden Fällen nicht erfüllt, Verwerfen des betrachteten potenziellen Nachbarknotens und Evaluieren eines anderen Nachbarknotens des aktuellen Knotens für eine Pfadvergrößerung, die mit der Bedingung eines maximalen Drehwinkels vereinbar ist;

für den Fall, dass die Konsistenz mit der Bedingung eines maximalen Drehwinkels für jeden der mindestens einen potenziellen Nachbarknoten (206d) nicht gegeben ist, Zurückverfolgen der Pfadentwicklung zu einem vorherigen Knoten auf dem bis zu einer vorherigen Iteration vergrößerten Teilpfad, wobei der vorherige Knoten der aktuelle Knoten einer vorherigen Iteration ist, bis zu dem der Teilpfad bis zu dieser vorherigen Iteration vergrößert wurde; und

Identifizieren eines zurückverfolgten Knotens von diesem vorherigen Knoten auf dem zurückverfolgten Pfad als den aktuellen Knoten zum Vergrößern des Teilpfades (206e), wobei dieser zurückverfolgte Knoten ein potenzieller Nachbarknoten dieses vorherigen Knotens ist, der die Bedingung eines maximalen Drehwinkels erfüllt, wobei das Zurückverfolgen das sukzessive Zurückgehen zu dem aktuellen Knoten in einer vorherigen Iteration umfasst, bis ein potenzieller Nachbarknoten des aktuellen Knotens in der vorherigen Iteration die Bedingung eines maximalen Drehwinkels erfüllt.

2. Prozessorimplementiertes Verfahren nach Anspruch 1, wobei der Schritt des Diskretisierens das Auflegen eines Gitters aus einer Mehrzahl von Einheitszellen auf den dreidimensionalen euklidischen Navigationsraum umfasst.

3. Prozessorimplementiertes Verfahren nach Anspruch 2, wobei das Gitter entweder ein gemustertes Gitter oder ein unregelmäßiges Gitter ist.

4. Prozessorimplementiertes Verfahren nach Anspruch 1, wobei das Zurückverfolgen zu dem mindestens einen vorherigen Knoten das Zurückverfolgen einer oder mehrerer Einheitszellen aus der Mehrzahl von Einheitszellen umfasst.

5. System (100) zum Minimieren der Länge eines von einem Starrflügel-Luftfahrzeug unternommenen Pfades, wobei ein Teilpfad iterativ vergrößert wird, bis ein Ziel erreicht ist, umfassend:

eine oder mehrere Datenspeichervorrichtungen (102), die operativ mit einem oder
mehreren Hardwareprozessoren (104) gekoppelt und dazu ausgelegt sind,
Anweisungen zu speichern, die zur Ausführung durch den oder die Hardwareprozessoren ausgelegt sind, um:
einen dreidimensionalen (3D) euklidischen Navigationsraum eines Luftfahrzeugs mit mindestens einem Hindernis zur Lenkbarkeit zu diskretisieren;
ausgehend von einem Startvertex, einen Nachbarknoten für den aktuellen Knoten iterativ zu identifizieren, um unter Verwendung eines Theta*-Algorithmus, der so modifiziert ist, dass er eine Bedingung eines maximalen Drehwinkels enthält, den Teilpfad zu vergrößern, bis ein Ziel erreicht ist, durch:

Identifizieren eines aktuellen Knotens, eines Großelternknotens und eines Elternknotens, die dem aktuellen Knoten zugeordnet sind, in einem Teilpfad in dem dreidimensionalen euklidischen Navigationsraum,
Identifizieren mindestens eines potenziellen Nachbarknotens des aktuellen Knotens, der eine Sichtlinienbedingung mit dem Elternknoten erfüllt;
Anwenden der Dreiecksungleichung, um den Teilpfad offline bis zu dem mindestens einen potenziellen Nachbarknoten durch Erweitern des Teilpfades von dem dem aktuellen Knoten zugeordneten Elternknoten zu dem potenziellen Nachbarknoten, der die Sichtlinienbedingung mit dem Elternknoten in einer geraden Linie erfüllt, so zu vergrößern, dass an einer dem Elternknoten (206b) entsprechenden Position gedreht wird,
Evaluieren der Konsistenz mit der Bedingung eines maximalen Drehwinkels für den mindestens einen potenziellen Nachbarknoten in Bezug auf den Großelternknoten, wobei einer der mindestens einen potenziellen Nachbarknoten als der Nachbarknoten identifiziert wird, wenn der durch (a) eine Linie zwischen dem Großelternknoten und dem Elternknoten und (b) eine Linie zwischen dem Elternknoten und dem potenziellen Nachbarknoten eingeschlossene Winkel innerhalb eines vorherbestimmten maximalen Drehwinkels des Luftfahrzeugs liegt, für den Fall, dass die Evaluierung in Bezug auf den Großelternknoten fehlschlägt, weiteres Evaluieren in Bezug auf den Elternknoten, um einen der mindestens einen potenziellen Nachbarknoten als den Nachbarknoten zum Vergrößern des Teilpfades zu identifizieren, wobei einer der mindestens einen potenziellen Nachbarknoten als der Nachbarknoten identifiziert wird, wenn der Winkel, der von (a) einer Linie zwischen dem Elternknoten und dem aktuellen Knoten und (b) einer Linie zwischen dem aktuellen Knoten und dem potenziellen Nachbarknoten eingeschlossen wird, innerhalb des vorbestimmten maximalen Drehwinkels des Luftfahrzeugs liegt, wenn ein betrachteter potenzieller Nachbarknoten die Bedingung eines maximalen Drehwinkels in beiden Fällen nicht erfüllt, Verwerfen des betrachteten potenziellen Nachbarknotens und Evaluieren eines anderen Nachbarknotens des aktuellen Knotens für eine Pfadvergrößerung, die mit der Bedingung eines maximalen Drehwinkels vereinbar ist;
für den Fall, dass die Konsistenz mit der Bedingung eines maximalen Drehwinkels für jeden der mindestens einen potenziellen Nachbarknoten nicht gegeben ist, Zurückverfolgen der Pfadentwicklung zu einem vorherigen Knoten auf dem bis zu einer vorherigen Iteration vergrößerten Teilpfad, wobei der vorherige Knoten der aktuelle Knoten einer vorherigen Iteration ist, bis zu dem der Teilpfad bis zu dieser vorherigen Iteration vergrößert wurde; und
Identifizieren eines zurückverfolgten Knotens von diesem vorherigen Knoten auf dem zurückverfolgten Pfad als den aktuellen Knoten zum Vergrößern des Teilpfades, wobei dieser zurückverfolgte Knoten ein potenzieller Nachbarknoten dieses vorherigen Knotens ist, der die Bedingung eines maximalen Drehwinkels erfüllt, wobei das Zurückverfolgen das sukzessive Zurückgehen zu dem aktuellen Knoten in einer vorherigen Iteration umfasst, bis ein potenzieller Nachbarknoten des aktuellen Knotens in der vorherigen Iteration die Bedingung eines maximalen Drehwinkels erfüllt.

6. System nach Anspruch 5, wobei der eine oder mehrere Hardwareprozessoren ferner dazu ausgelegt sind, den dreidimensionalen euklidischen Navigationsraum durch Auflegen eines Gitters aus einer Mehrzahl von Einheitszellen auf den dreidimensionalen euklidischen Navigationsraum zu diskretisieren.

7. System nach Anspruch 6, wobei das Gitter entweder ein gemustertes Gitter oder ein unregelmäßiges Gitter ist.

8. System nach Anspruch 5, wobei das Zurückverfolgen zu dem mindestens einen vorherigen Knoten das Zurückverfolgen einer oder mehrerer Zellen aus der Mehrzahl von Zellen umfasst.

9. Ein oder mehrere nichtflüchtige maschinenlesbare Informationsspeichermedien, die eine oder mehrere Anweisungen umfassen, die, wenn sie von einem oder mehreren Hardwareprozessoren ausgeführt werden, den einen oder mehrere Hardwareprozessoren veranlassen, ein Verfahren nach einem der Ansprüche 1 bis 4 durchzuführen.

**Revendications**

1. Procédé mis en œuvre par processeur (200) pour minimiser la longueur d'une trajectoire entreprise par un véhicule aérien à voilure fixe, dans lequel une trajectoire partielle est augmentée de manière itérative jusqu'à ce qu'une destination ait été atteinte, le procédé comprenant les étapes ci-dessous consistant à :

   discrétiser un espace de navigation euclidien tridimensionnel (3D) du véhicule aérien avec au moins un obstacle à des fins de résolubilité (202) ;
   à partir d'un sommet de départ, identifier de manière itérative un nœud voisin du nœud en cours pour augmenter la trajectoire partielle, jusqu'à ce que la destination soit atteinte (206), en utilisant un algorithme Thêta* qui est modifié en vue d'incorporer une contrainte d'angle maximum des virages, en mettant en œuvre les étapes ci-dessous consistant à :

identifier un nœud en cours, un nœud grand-parent et un nœud parent associé au nœud en cours, dans une trajectoire partielle au sein de l'espace de navigation euclidien 3D (204) ;

identifier au moins un nœud voisin potentiel du nœud en cours satisfaisant une condition de ligne de visée avec le nœud parent (206a) ;

augmenter la trajectoire partielle hors ligne jusqu'audit au moins un nœud voisin potentiel, en utilisant une inégalité triangulaire, de façon à effectuer un virage à un emplacement correspondant au nœud parent (206b), en étendant la trajectoire partielle, depuis le nœud parent associé au nœud en cours jusqu'au nœud voisin potentiel satisfaisant la condition de ligne de visée avec le nœud parent en ligne droite ;

évaluer une cohérence de contrainte d'angle maximum des virages pour ledit au moins un nœud voisin potentiel par rapport au nœud grand-parent ;

dans lequel un nœud dudit au moins un nœud voisin potentiel est identifié comme étant le nœud voisin si l'angle sous-tendu par (a) une ligne entre le nœud grand-parent et le nœud parent et (b) une ligne entre le nœud parent et le nœud voisin potentiel, se situe dans un angle maximum prédéterminé des virages du véhicule aérien ;

dans le cas où l'évaluation par rapport au nœud grand-parent échoue, effectuer en outre l'évaluation par rapport au nœud parent en vue d'identifier un nœud dudit au moins un nœud voisin potentiel comme étant le nœud voisin pour augmenter la trajectoire partielle (206c), dans lequel un nœud dudit au moins un nœud voisin potentiel est identifié comme étant le nœud voisin si l'angle sous-tendu par (a) une ligne entre le nœud parent et le nœud en cours et (b) une ligne entre le nœud en cours et le nœud voisin potentiel, se situe dans l'angle maximum prédéterminé des virages du véhicule aérien ;

si un nœud voisin potentiel pris en considération ne respecte pas la contrainte d'angle maximum des virages dans les deux instances, abandonner le nœud voisin potentiel pris en considération et évaluer un autre nœud voisin du nœud en cours en vue d'une augmentation de trajectoire compatible avec la contrainte d'angle maximum des virages ;

dans le cas où la cohérence de contrainte d'angle maximum des virages échoue pour chaque nœud dudit au moins un nœud voisin potentiel (206d), effectuer un retour en arrière de l'évolution de trajectoire jusqu'à un nœud antérieur le long de la trajectoire partielle augmentée jusqu'à une itération précédente, dans lequel le nœud antérieur est le nœud en cours d'une itération précédente, jusqu'auquel la trajectoire partielle a été augmentée jusqu'à cette itération précédente ; et

identifier un nœud ayant fait l'objet d'un retour en arrière à partir de ce nœud antérieur sur la trajectoire ayant fait l'objet d'un retour en arrière comme étant le nœud en cours pour augmenter la trajectoire partielle (206e), dans lequel ce nœud ayant fait l'objet d'un retour en arrière est un nœud voisin potentiel de ce nœud antérieur satisfaisant la contrainte d'angle maximum des virages ;

dans lequel l'étape de retour en arrière comprend l'étape consistant à revenir successivement au nœud en cours dans une itération précédente, jusqu'à ce qu'un nœud voisin potentiel du nœud en cours dans l'itération précédente satisfasse la contrainte d'angle maximum des virages.

2. Procédé mis en œuvre par processeur selon la revendication 1, dans lequel l'étape de discrétisation comprend l'étape consistant à imposer une grille d'une pluralité de cellules unitaires, sur l'espace de navigation euclidien 3D.

3. Procédé mis en œuvre par processeur selon la revendication 2, dans lequel la grille est soit une grille à motifs soit une grille irrégulière.

4. Procédé mis en œuvre par processeur selon la revendication 1, dans lequel l'étape de retour en arrière jusqu'audit au moins un nœud antérieur consiste à effectuer un retour en arrière d'une ou plusieurs cellules unitaires parmi la pluralité de cellules unitaires.

5. Système (100) destiné à minimiser la longueur d'une trajectoire entreprise par un véhicule aérien à voilure fixe, dans lequel une trajectoire partielle est augmentée de manière itérative jusqu'à ce qu'une destination ait été atteinte, le système comprenant :

un ou plusieurs dispositifs de stockage de données (102) couplés fonctionnellement à un ou plusieurs processeurs matériels (104) et configurés de manière à stocker des instructions configurées de manière à être exécutées par ledit un ou lesdits plusieurs processeurs matériels en vue de mettre en œuvre les étapes ci-dessous consistant à :

discrétiser un espace de navigation euclidien tridimensionnel (3D) du véhicule aérien avec au moins un obstacle à des fins de résolubilité ;

à partir d'un sommet de départ, identifier de manière itérative un nœud voisin du nœud en cours pour augmenter la trajectoire partielle, jusqu'à ce que la destination soit atteinte, en utilisant un algorithme Thêta* qui est modifié en vue d'incorporer une contrainte d'angle maximum des virages, en mettant en œuvre les étapes ci-dessous consistant à :

identifier un nœud en cours, un nœud grand-parent, et un nœud parent associé au nœud en cours, dans une trajectoire partielle au sein de l'espace de navigation euclidien 3D ;

identifier au moins un nœud voisin potentiel du nœud en cours satisfaisant une condition de ligne de visée avec le nœud parent ;

appliquer l'inégalité triangulaire en vue d'augmenter la trajectoire partielle hors ligne, jusqu'audit au moins un nœud voisin potentiel, de façon à effectuer un virage à un emplacement correspondant au nœud parent (206b), en étendant la trajectoire partielle, depuis le nœud parent associé au nœud en cours jusqu'au nœud voisin potentiel satisfaisant la condition de ligne de visée avec le nœud parent en ligne droite ;

évaluer une cohérence de contrainte d'angle maximum des virages pour ledit au moins un nœud voisin potentiel par rapport au nœud grand-parent, dans lequel un nœud dudit au moins un nœud voisin potentiel est identifié comme étant le nœud voisin si l'angle sous-tendu par (a) une ligne entre le nœud grand-parent et le nœud parent et (b) une ligne entre le nœud parent et le nœud voisin potentiel, se situe dans un angle maximum prédéterminé des virages du véhicule aérien ;

dans le cas où l'évaluation par rapport au nœud grand-parent échoue, effectuer en outre l'évaluation par rapport au nœud parent en vue d'identifier un nœud dudit au moins un nœud voisin potentiel comme étant le nœud voisin pour augmenter la trajectoire partielle ; dans lequel un nœud dudit au moins un nœud voisin potentiel est identifié comme étant le nœud voisin si l'angle sous-tendu par (a) une ligne entre le nœud parent et le nœud en cours et (b) une ligne entre le nœud en cours et le nœud voisin potentiel, se situe dans l'angle maximum prédéterminé des virages du véhicule aérien ;

si un nœud voisin potentiel pris en considération ne respecte pas la contrainte d'angle maximum des virages dans les deux instances, abandonner le nœud voisin potentiel pris en considération et évaluer un autre nœud voisin du nœud en cours en vue d'une augmentation de trajectoire compatible avec la contrainte d'angle maximum des virages ;

dans le cas où la cohérence de contrainte d'angle maximum des virages échoue pour chaque nœud dudit au moins un nœud voisin potentiel, effectuer un retour en arrière de l'évolution de trajectoire jusqu'à un nœud antérieur le long de la trajectoire partielle augmentée jusqu'à une itération précédente, dans lequel le nœud antérieur est le nœud en cours d'une itération précédente, jusqu'auquel la trajectoire partielle a été augmentée jusqu'à cette itération précédente ; et

identifier un nœud ayant fait l'objet d'un retour en arrière à partir de ce nœud antérieur sur la trajectoire ayant fait l'objet d'un retour en arrière comme étant le nœud en cours pour augmenter la trajectoire partielle, dans lequel ce nœud ayant fait l'objet d'un retour en arrière est un nœud voisin potentiel de ce nœud antérieur satisfaisant la contrainte d'angle maximum des virages ;

dans lequel l'étape de retour en arrière comprend l'étape consistant à revenir successivement au nœud en cours dans une itération précédente, jusqu'à ce qu'un nœud voisin potentiel du nœud en cours dans l'itération précédente satisfasse la contrainte d'angle maximum des virages.

6. Système selon la revendication 5, dans lequel ledit un ou lesdits plusieurs processeurs matériels sont en outre configurés de manière à : discrétiser l'espace de navigation euclidien 3D en imposant une grille d'une pluralité de cellules unitaires, sur l'espace de navigation euclidien 3D.

7. Système selon la revendication 6, dans lequel la grille est soit une grille à motifs, soit une grille irrégulière.

8. Système selon la revendication 5, dans lequel l'étape de retour en arrière jusqu'audit au moins un nœud antérieur consiste à effectuer un retour en arrière d'une ou plusieurs cellules unitaires parmi la pluralité de cellules unitaires.

9. Un ou plusieurs supports de stockage non transitoires d'informations lisibles par machine comprenant une ou plusieurs instructions qui, lorsqu'elles sont exécutées par un ou plusieurs processeurs matériels, amènent ledit un ou lesdits plusieurs processeurs matériels à mettre en œuvre un procédé selon l'une quelconque des revendications 1 à 4.

SYSTEM **100**

MEMORY **102**

HARDWARE PROCESSOR(S) **104**

I/O INTERFACE(S) **106**

FIG.1

discretizing a 3-Dimensional (3D) Euclidean navigation space of an aerial vehicle for tractability — 202

identifying a current node, a grandparent node and a parent node associated with the current node, in a partial path traversed by the aerial vehicle in the 3-D Euclidean navigation space — 204

iteratively, identifying a neighbor node for the current node to augment the partial path, until a destination is reached — 206

A

FIG.2

200

$(A)$

identifying at least one potential neighbor node of the current node satisfying a line of sight condition with the parent node

— 206a

using triangle inequality to augment the partial path offline, up to the at least one potential neighbor node by turning at the location of the parent node

— 206b

evaluating a maximum turn angle constraint consistency for the at least one potential neighbor node with respect to the grandparent node and further evaluating with respect to the parent node in the event that the evaluation with respect to the grandparent node fails, to identify one of the at least one potential neighbor node as the neighbor node for augmenting the partial path

— 206c

backtracking to at least one prior node along the partial path augmented until a previous iteration, in the event that the maximum turn angle constraint consistency fails for each of the at least one potential neighbor nodes

— 206d

identifying a backtracked node from the at least one prior node on a backtracked path as the current node for augmenting the partial path

— 206e

FIG.2 (CONTD.)

300

S_start

Blocked cell

Path

S_goal

FIG.3B

S_start

Blocked cell

Path

S_goal

FIG.3A
(PRIOR ART)

FIG.4

FIG.5

Potential neighbor node 1

Potential neighbor node 2

Current node

Potential neighbor node 3

Potential neighbor node 4

Grandparent node

Target

Obstacle

Start backtracking

Detour

Source

FIG.6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 201721001481

**Non-patent literature cited in the description**

- **YAKOVLEV KONSTANTIN et al.** Grid-Based Angle-Constrained Path Planning. *ECCV 2016 CONFERENCE,* 03 November 2015

- **ALEX NASH et al.** *Incremental Phi: Incremental Any-Angle Path Planning on Grids,* 31 December 2009